# EUROPEAN PATENT APPLICATION

(11) **EP 1 930 691 A2**
(43) Date of publication of application: **11.06.2008**
(21) Application number: 07120120.6
(22) Date of filing: 06.11.2007
(51) Int. Cl.: G01C 19/56

(54) **Accelerometer derived gyro vibration rectification error compensation**

(30) Priority: 08.11.2006 US 557820
(71) Applicant: Honeywell International, Inc., Morristown, NJ 07962 (US)
(72) Inventor: Kraetz, William F., Plymouth, MN 55446 (US)
(74) Representative: Buckley, Guy Julian

(57) **Abstract**

An apparatus compensates for vibration rectification error present in a MEMS gyroscope output signal. The MEMS gyroscope has an axis of rotation normal to an operative plane. The apparatus includes at least one accelerometer situated to generate an acceleration signal indicating acceleration along the axis of rotation. A processor generates a compensation signal based upon the acceleration signal. An output stage amplifies the gyroscope output signal according to the compensation signal. The processor retrieves compensation data from a processor-readable memory according to the acceleration signal. The compensation signal is further based upon the compensation data.

## Description

### BACKGROUND OF THE INVENTION

A Microelectromechanical Systems (MEMS) is vibrating proof mass structure gyroscope configured on a scale of from a micrometer (a millionth of a meter) to a millimeter (thousandth of a meter) in overall length. Generally MEMS gyroscopes are fabricated using modified silicon fabrication technology (used to make electronics), molding and plating, wet etching (KOH, TMAH) and dry etching (RIE and DRIE), electro discharge machining (EDM), and other technologies. MEMS fabrication is readily accomplished in conjunction with fabrication of attendant driver circuitry supporting the MEMS gyroscope in Inertial Measurement Units (IMUs) which are, in turn, used in navigation.

In the MEMS gyroscope, movement of a vibrating proof mass is used to measure acceleration. A vibrating object tends to keep vibrating in the same plane even as its support is rotated. Measuring the deflection of the vibrating object relative to the support yields a measure of rotational acceleration.
The Coriolis effect is evidenced by an apparent deflection of a moving object in a rotating frame of reference. The MEMS gyroscope is of a type know as a Coriolis vibratory gyro because as the plane of oscillation is rotated, the response detected by the transducer results from the Coriolis term in its equations of motion ("Coriolis force").

MEMS Gyroscopes experience a phenomenon referred to as Vibration Rectification Error (VRE). Environmental noise of zero average such as vibration orthogonal to the plane of MEMS gyroscope operative can create non-zero bias on the gyro signal output called VRE. VRE severely degrades the output of the MEMS gyroscope.

Vibration in the axis normal to the plane describing MEMS proof mass vibration can cause excess deflection of the MEMS proof mass. The excess deflection can be confused with a true rate input and causes a bias change during episodes of vibration. Such bias change during vibration adversely affects the performance of the IMU leading to position errors or flight control errors.

What is needed in the art is an apparatus and method for compensating for VRE.

### SUMMARY OF THE INVENTION

An apparatus compensates for vibration rectification error present in a MEMS gyroscope output signal. The MEMS gyroscope has an axis of rotation normal to an operative plane. The apparatus includes at least one accelerometer situated to generate an acceleration signal indicating acceleration along the axis of rotation. A processor generates a compensation signal based upon the acceleration signal. An output stage amplifies the gyroscope output signal according to the compensation signal. The processor retrieves compensation data from a processor-readable memory according to the acceleration signal. The compensation signal is further based upon the compensation data.

In one non-limiting embodiment, an IMU, including at least one MEMS gyroscope, is subjected to vibration according to a standard vibration profile. Mounted on or in the IMU are at least one accelerometer. The outputs of both the at least one MEMS gyroscope and the at least one accelerometer are recorded at intervals throughout the vibration according to the standard vibration profiles to populate a database relating a frequency and amplitude of vibration to an expected VRE.

In one non-limiting embodiment, each of three MEMS gyroscopes are mounted on a base and situated to measure rotation about each of a first set of three mutually orthogonal axes. Similarly, three accelerometers are mounted on the base to measure vibration along each of a second set of three mutually orthogonal axes. The first and second set of three mutually orthogonal axes need not coincide, as translation of measured vibration along each of the second set of three mutually orthogonal axes into components along the first set of three mutually orthogonal axes is readily accomplished.

From vibration along each of the second three mutually orthogonal axes, an acceleration vector normal to the gyro sensor is determined and used as input to a computer model for real-time compensation. In calibration, a coefficient of a polynominal are determined that indicates the gyro's tendency to VRE. The coefficients are maintained in the IMU through the manufacture process in a processor-readable coefficient file, and constitutes a portion of the software delivered as part of the IMU. In operation, the gyro data is acquired from the real-world environment. Accelerometer data is observed, and by means of the derived model, are applied as a compensation bias term significantly reducing the effective and observable vibration rectification error at the output of the IMU.

Accelerometer data reflects measured vibration and is generally much less susceptible to errors than the gyroscope. In one further non-limiting embodiment, the at least one accelerometer is mounted inside the IMU and oriented to directly measure vibration normal to the plane describing the vibration of the proof mass. Data collected in operation of the accelerometer represents the true acceleration seen by the gyroscope in an axis normal to the sensor plane. A processor, in operation of the IMU, recalls the VRE effects measured at according to an instant measurement of frequency and amplitude of IMU vibration, and compensates the raw gyroscope data according to the measured frequency and amplitude to yield more accurate gyroscope data.

### BRIEF DESCRIPTION OF THE DRAWINGS

Preferred and alternative embodiments of the present invention are described in detail below with reference to the following drawings:

FIGURE 1 is a block diagram of a single MEMS gyroscope - single accelerometer installation; and

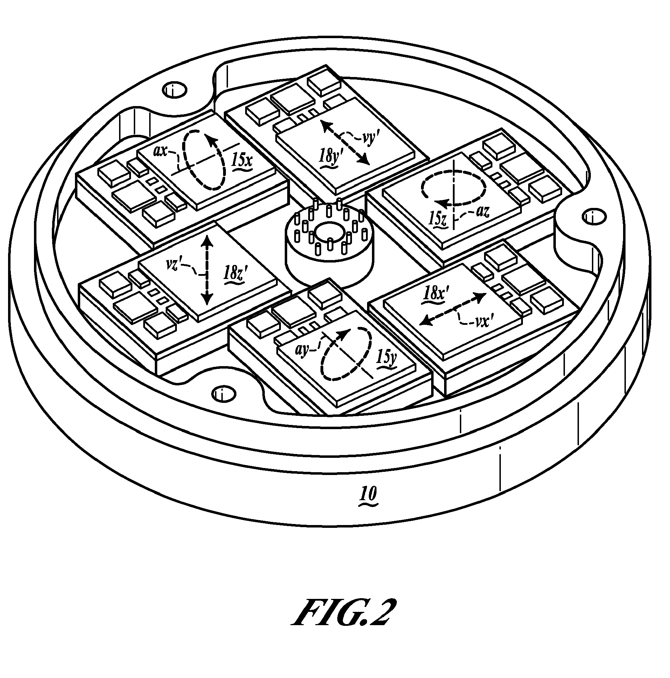

FIGURE 2 is a three MEMS gyroscope - three accelerometer

### DETAILED DESCRIPTION OF THE PREFERRED EMBODIMENT

An apparatus compensates for vibration rectification error present in a MEMS gyroscope output signal. The MEMS gyroscope has an axis of rotation normal to an operative plane. The apparatus includes at least one accelerometer situated to generate an acceleration signal indicating acceleration along the axis of rotation. A processor generates a compensation signal based upon the acceleration signal. An output stage amplifies the gyroscope output signal according to the compensation signal. The processor retrieves compensation data from a processor-readable memory according to the acceleration signal. The compensation signal is further based upon the compensation data.

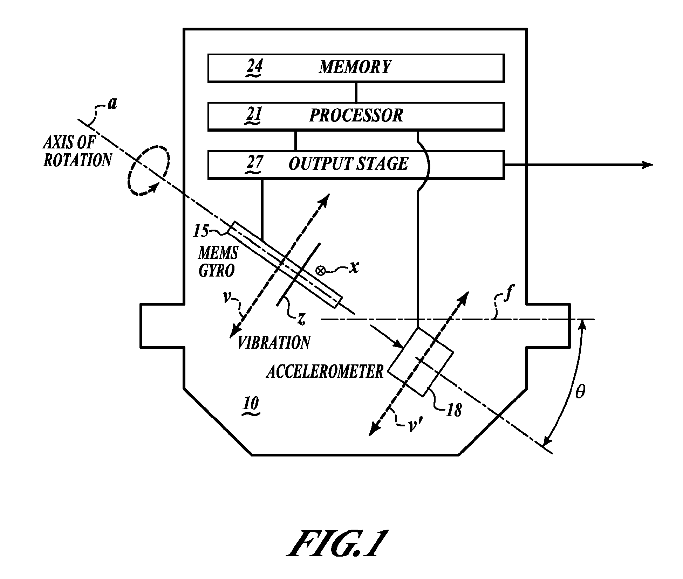

Referring to FIG. 1, the MEMS gyroscope 15 is seen in side view mounted on the mount 10 at a sense angle θ to a flange plane f. The MEMS gyroscope 15 operates to sense rotational acceleration about an axis of rotation *a.* The MEMS gyroscope 15 characteristically have an axis of rotation *a,* defining the Coriolis forces the MEMS gyroscope 15 senses. A drive axis x defines the principal axis of driven movement of a proof mass (not shown) within the MEMS gyroscope 15. The intersection of the axis of rotation *a* and the drive axis x define a plane of operation. Normal to that plane is an inertial axis z. In operation of the MEMS gyroscope 15, vibration along a vibration vector *ν* parallel to the inertial axis z will result in vibration rectification error in the output signal of the MEMS gyrosocope 15.

In a non-limiting embodiment, an accelerometer 18 senses acceleration along a principal axis *ν*' In a non-limiting embodiment where the single MEMS gyroscope 15 is used with the single accelerometer 18, the principal axis *ν*' is aligned to be parallel to the vibration vector *ν* and likewise the inertial axis z. The accelerometer is chosen to be less susceptible to vibration rectification error than the MEMS gyroscope 15.

The accelerometer 18 generates a signal indicative of acceleration along the principal axis v'. A processor 21 receives the signal from the accelerometer 18. Based upon the signal, the processor 21 retrieves a vibration signal from a memory 24. The processor 21 then formulates conditioning instructions to the output stage 27. Generally the output stage 27 removes a bias according to the conditioning instructions thereby to compensate for vibration rectification error.

In an alternative embodiment, an inertial measurement unit ("IMU") includes a mount 10. On the mount 10 three MEMS gyroscopes, 15x, 15y, and 15z are mounted allowing the IMU to measure rotational acceleration about three axis mutually orthogonal axes of rotation *ax, ay,* and *az,* thereby assuring definition of movement in 3-dimensioned space.

Also on the mount 10 are three orthogonally related accelerometers 18x', 18y', and 18z'. As the MEMS gyroscopes 15x, 15y, and 15z are respectively oriented along three mutually perpendicular axes of rotation *ax, ay,* and *az* to sense rotational movement in 3-dimensioned space, the accelerometers 18x', 18y', and 18z' are also respectively oriented along three mutually orthogonal axes *vx', vy',* and *vz*' to describe translational movement in 3-dimensioned space. There is no requirement that the axes *ax, ay,* and *az* used to orient the MEMS gyroscopes coincide with the axes *vx', vy',* and *vz*' used to orient the accelerometers 18x', 18y', and 18z'. In this non-limiting embodiment, the axes coincide.

Because the processor 21 (FIG. 1) can readily transform 3-dimensioned space from one three-axis reference system to another, other embodiments may allow more compact ordering of components within a space by allowing freedom in placement of accelerometers 18x', 18y', and 18z'. The processor 21 resolves sensed vibration at the accelerometers 18x', 18y', and 18z' into vibration vectors with components normal to each of the MEMS gyroscopes 15x, 15y, and 15z. Relative to each of the MEMS gyroscopes 15x, 15y, and 15z, a vibration component along the respective MEMS gyroscope's 15x, 15y, and 15z axis of rotation allows compensation for vibration rectification error in that MEMS gyroscope 15x, 15y, and 15z.

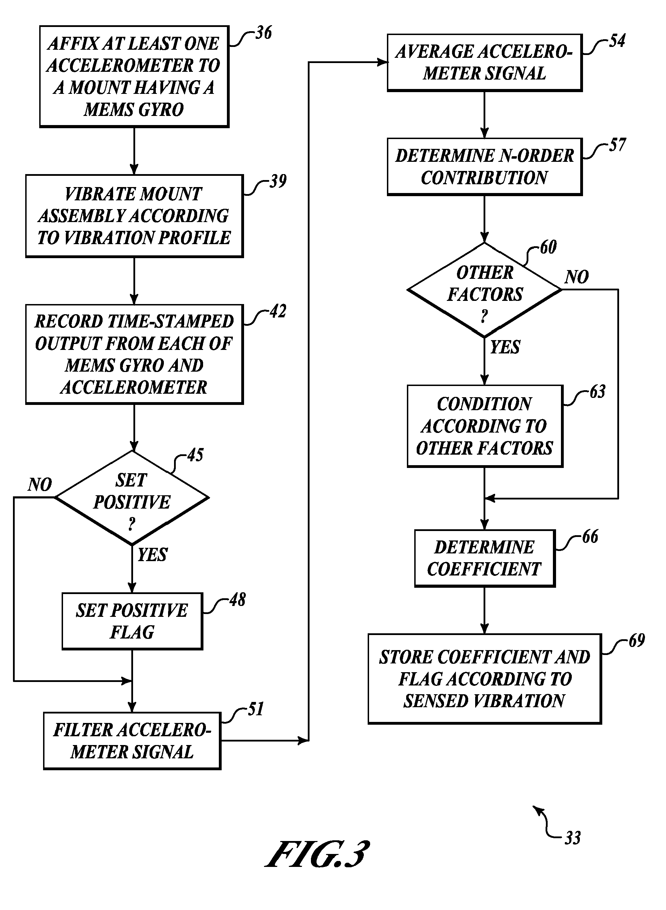

Referring to FIG. 3, a method 33 for developing compensation data includes, at a block 36, at least one accelerometer being affixed to a mount including a MEMS gyroscope. The at least one accelerometer is situated to detect and measure vibration along an axis of rotation for the MEMS gyroscope to form a mount assembly. Measurement of vibration along the axis may be achieved by one or more accelerometers and vibration can be resolved by vector geometric relationships. By way of nonlimiting example, six accelerometers may be present in some missile IMUs in order to assure redundancy along each axis.

At a block 39, the mount assembly is vibrated according to a standard profile selected to subject the MEMS gyroscope on the mount to exemplary vibrations characteristic of the anticipated operating conditions in a given application. By way of non-limiting example, the vibration characteristic to a passenger automobile application is very different than those present in the launch of a missile. Vibration is generally expressed in terms of amplitude and frequency. The mount is vibrated at amplitudes and frequencies selected to demonstrate characteristics of the MEMS gyroscope on the mount.

At a block 42, during the vibration data from the at least one accelerometer and the MEMS gyroscope is time-stamped and stored according to the accelerometer readings. Expressing a relationship between vibration rectification error and acceleration is a purpose of the method 33. In determining the role of acceleration as sensed by the at least one accelerometer, output from the MEMS gyroscope evidences the generation of vibration rectification error in the form of a bias displacing the output either positively or negatively. Recalling that vibration rectification error is caused by the excess deflection of the MEMS proof mass, the vibration rectification error strongly correlates to the normal acceleration the MEMS gyroscope experiences. The study of the phenomenon includes storing data evidencing the deflection of the proof mass as a bias present as a function of vibration.

At a block 45, the bias is determined to be either a positive bias or a negative bias. Experimentation has shown that under vibration, a MEMS gyroscope will evidence a presence of either a positive or negative bias in the rectification error. In experimentation, a mount having an accelerometer and a MEMS gyroscope exhibits a "set" - i.e. the bias will characteristically either be consistently positive or consistently negative. The set of the mount having an accelerometer and a MEMS gyroscope is demonstrated as the mount is subjected to the vibration according to a standard profile as recorded in the block 39. If the set is positive, a flag is stored at a block 48 to indicate the positive set. If the set is negative, in this non-liming example, the value of the flag remains negative.

In a noisy environment or where signal the accelerometer outputs includes harmonics that tend to obscure the amplitude and the frequency of the sensed vibration, it is optionally advantageous to filter the amplifier output signal at a block 51.

Optionally, a number of signal conditioning steps may be employed to make a relationship between vibration along the vibration axis of the MEMS gyroscope more obvious under examination. By means of non-limiting example, the signal from the accelerometer may be subjected to sampling and squaring in order to determine a magnitude of the measured acceleration. Statistical means of analyzing the accelerometer output might include root mean square power measurement. The use of root mean square power measurement is one of a number of exemplary means of determining a relation between VRE and measured acceleration as expressed in the signal output of the accelerometer. Signal conditioning occurs at the block 54.

At a block 57, further statistical analysis is used to determine the n-order contribution of acceleration on the MEMS gyroscope signal. After a database is suitably populated with data according to the block 42, the search for a functional model relating VRE evidenced in the output of the MEMS gyroscope to the signal of the at least one accelerometer. Generally speaking, a polynomial of an *n-th* order will suitably relate the sensed acceleration to the VRE present in the output of the MEMS gyroscope.

Finding a polynomial of suitable order is known as model reduction. Model reduction is a powerful tool which has been applied throughout many different disciplines, including controls, fluid dynamics, structural dynamics, and circuit design. The goal of model reduction is to develop a model with a low number of states, which captures the system dynamics accurately over a range of frequencies and forcing inputs. Many effective reduction techniques have been developed in a controls context. Several methods have been developed for computing approximations to the grammians for large systems, including the approximate subspace iteration, least squares approximation, and Krylov subspace methods. Other techniques have included a typical approach including to first determine an orthonormal basis, and to then project the large system onto this reduced space to derive the reduced-order model. In particular, the proper orthogonal decomposition (POD), also known as Karhunen-Lo'eve expansions, has been developed as a popular method of deriving basis vectors for high-order systems using the method of snapshots. Another class of reduction techniques that are based on matching moments of the system transfer function has been developed for analysis of large linear circuits. For instance by way of non-limiting example, the Arnoldi algorithm can be used to generate vectors which form an orthonormal basis for the Krylov subspace. A discernable polynomial relating sensed acceleration is assuredly available to model the relationship between vibration rectification error and acceleration. At the block 57, the polynomial is derived having an *n-th* order term for the vibration normal to the MEMS gyroscope.

At a block 60, other known factors are considered. For instance, it is known that a first order coefficient for temperature (T) may optionally be useful to express the effect that temperature has on the operation of the MEMS gyroscope. At a block 63, other such factors may also be introduced into the polynomial.

Once the polynomial is constructed to address the general case of a design of MEMS gyroscope conjoined with the at least one accelerometer, it is advantageous to test individual units. At a block 66, the specific MEMS gyroscope, mount, and at least one accelerometer are subjected to the standard vibration profile thereby to establish coefficients for the specific MEMS gyroscope, mount, and at least one accelerometer optionally already configured as an IMU. In this manner, coefficients are selected suitable for the specific mount upon which the MEMS gyroscope is fixed. The VRE is recorded at each of these levels and used as input to a computer model for real-time compensation. In operation, the MEMS gyroscope data can be tuned for optimum response with the particular mount assembly.

At a block 69, the derived coefficients to the compensation polynomial are loaded onto a processor readable memory for retrieval in real-time compensation in operation of the MEMS gyroscope. The processor is configured to retrieve the coefficients to condition the output signal of the MEMS gyroscope to compensate for VRE.

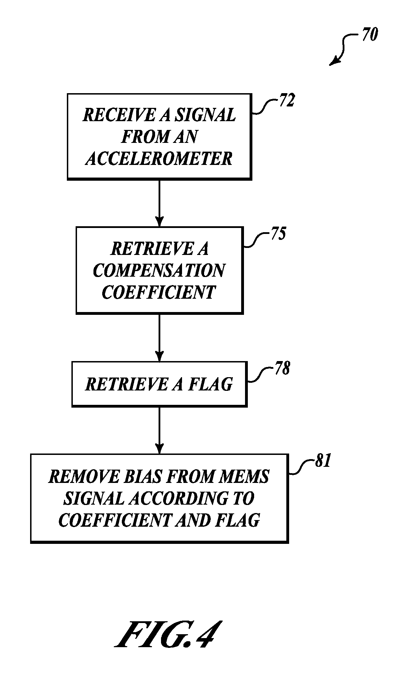

Referring to FIG. 4, a method 70 is used to compensate for VRE in the output signal of a MEMS gyroscope. At a block 72, the output of the at least one accelerometer is monitored to resolve any vibration along an axis perpendicular or orthogonal to the operational plane of the MEMS gyroscope. Where a vibration signal is resolved to be orthogonal to the plane of the MEMS gyroscope, once a threshold value of for amplitude and, optionally, frequency is met, the processor moves to a state indicating receipt of the signal from the accelerometer.

At a block 75, the vibration amplitude and frequency trigger retrieval of a corresponding coefficient set from a processor-readable memory according to the vibration values. Given the coefficients, a compensation polynomial is solved for a compensation bias term. At a block 78, a flag is retrieved to determine whether the compensation bias term is added to or subtracted from the MEMS gyroscope output signal according to a set exhibited in the course of vibrating the mount assembly according to a set vibration profile (See FIG. 3).

A compensation bias term is developed and applied to gyro data thereby reducing the effective and observable vibration rectification error at the output of the IMU.

The embodiments of the invention in which an exclusive property or privilege is claimed are defined as follows:

## Claims

1. An apparatus compensating for vibration rectification error present in a MEMS gyroscope output signal indicative of rotation about an axis of rotation normal to an operative plane, the MEMS gyroscope affixed to a mount, the apparatus comprising:
at least one accelerometer situated on the mount to generate a vibration signal indicating acceleration of the mount along the axis of rotation;
a processor to generate a compensation signal based upon the signal; and
an output stage to amplify the gyroscope output signal according to the compensation signal.

2. The apparatus of Claim 1, wherein:
the processor retrieves compensation data from a processor-readable memory according to the vibration signal; and
the compensation signal is further based upon the compensation data.

3. The apparatus of Claim 1, wherein:
the at least one accelerometer includes an assembly of three orthogonal accelerometers including
a first accelerometer output signal from a first accelerometer indicating acceleration of the mount along a first accelerometer axis;
a second accelerometer output signal from a second accelerometer indicating acceleration of the mount along a second accelerometer axis, the second accelerometer being situated such that the second accelerometer axis is orthogonal to the first accelerometer axis;
a third accelerometer output signal from a third accelerometer indicating acceleration of the mount along a third accelerometer axis, the third accelerometer being situated such that the third accelerometer axis is orthogonal to both of the first accelerometer axis and the second accelerometer axis;
the processor derives the vibration signal based upon first accelerometer signal, the second accelerometer signal, and the third accelerometer signal.

4. The apparatus of Claim 1, wherein:
the MEMS gyroscope output signal includes:
a first MEMS gyroscope output signal indicating rotation about a first axis of rotation;
a second MEMS gyroscope output signal indicating rotation about a second axis of rotation, the second MEMS gyroscope being situated such that the second axis of rotation is orthogonal to the first axis of rotation;
a third MEMS gyroscope output signal indicating rotation about a third axis of rotation, the third MEMS gyroscope being situated such that the third axis of rotation is orthogonal to both of the first axis of rotation and the second axis of rotation; and
wherein the processor is configured derive a first vibration vector parallel to the first axis of rotation; a second vibration vector parallel to the second axis of rotation; a third vibration vector parallel to the third axis of rotation,
wherein the at least one accelerometer includes an assembly of three orthogonal accelerometers including:
a first accelerometer output signal from a first accelerometer indicating acceleration of the mount along a first accelerometer axis;
a second accelerometer output signal from a second accelerometer indicating acceleration of the mount along a second accelerometer axis, the second accelerometer being situated such that the second accelerometer axis is orthogonal to the first accelerometer axis;
a third accelerometer output signal from a third accelerometer indicating acceleration of the mount along a third accelerometer axis, the third accelerometer being situated such that the third accelerometer axis is orthogonal to both of the first accelerometer axis and the second accelerometer axis,
wherein the first accelerometer axis is parallel to the first axis of rotation and wherein the first accelerometer axis is skewed from the first axis of rotation, the second axis of rotation, and the third axis of rotation.

5. The apparatus of Claim 1, wherein the mount is a silicon die and a monolithic block.

6. A method for developing a compensation data residing on a processor-readable memory, the method comprising:
vibrating a mount at a vibration frequency and a vibration amplitude, the mount having at least one MEMS gyroscope generating a MEMS gyroscope signal indicating rotation about an axis of rotation and at least one accelerometer generating an accelerometer signal indicative of vibration along the axis of rotation;
receiving the accelerometer signal and the gyroscope signal at a signal processor; and
deriving a vibration signal to include frequency and amplitude data and based upon the accelerometer signal.

7. The method of Claim 6, further comprising:
deriving a compensation signal based upon a relationship between the vibration signal, the accelerometer signal and the gyroscope signal; and
storing the compensation signal in a processor-readable memory according to the vibration signal.

8. The method of Claim 6, wherein:
the at least one accelerometer includes:
a first accelerometer output signal from a first accelerometer indicating acceleration of the mount along a first accelerometer axis;
a second accelerometer output signal from a second accelerometer indicating acceleration of the mount along a second accelerometer axis, the second accelerometer being situated such that the second accelerometer axis is orthogonal to the first accelerometer axis;
a third accelerometer output signal from a third accelerometer indicating acceleration of the mount along a third accelerometer axis, the third accelerometer being situated such that the third accelerometer axis is orthogonal to both of the first accelerometer axis and the second accelerometer axis; and
the processor is further configured to resolve the first accelerometer output signal, the second accelerometer output signal, and the third accelerometer output signal into a vibration signal along the axis of rotation.

9. The method of Claim 8, wherein:
the at least one MEMS gyroscope includes:
a first MEMS gyroscope output signal indicating rotation about a first axis of rotation;
a second MEMS gyroscope output signal indicating rotation about a second axis of rotation, the second MEMS gyroscope being situated such that the second axis of rotation is orthogonal to the first axis of rotation;
a third MEMS gyroscope output signal indicating rotation about a third axis of rotation, the third MEMS gyroscope being situated such that the third axis of rotation is orthogonal to both of the first axis of rotation and the second axis of rotation; and
the processor is further configured to resolve the first accelerometer output signal, the second accelerometer output signal, and the third accelerometer output signal into a first vibration signal along the first axis of rotation; a second vibration signal along the second axis of rotation; and a third vibration signal along the third axis of rotation.

10. The method of Claim 9, further comprising:
deriving a first compensation signal based upon a relationship between the first vibration signal, the first accelerometer signal and the first gyroscope signal;
deriving a second compensation signal based upon a relationship between the second vibration signal, the second accelerometer signal and the second gyroscope signal;
deriving a third compensation signal based upon a relationship between the third vibration signal, the third accelerometer signal and the third gyroscope signal;
storing the first compensation signal in a processor-readable memory according to the first vibration signal;
storing the second compensation signal in a processor-readable memory according to the second vibration signal; and
storing the third compensation signal in a processor-readable memory according to the third vibration signal.
